# EUROPEAN PATENT APPLICATION

(11) **EP 2 357 744 A2**
(43) Date of publication of application: **17.08.2011**
(21) Application number: 11152790.9
(22) Date of filing: 31.01.2011
(51) Int. Cl.: H04H 20/10, G06Q 30/00

(54) **A method and apparatus for identifying advertisements for output by a television receiver**

(30) Priority: 09.02.2010 US 703049
(71) Applicant: EchoStar Global B.V., 7604 BJ Almelo (NL)
(72) Inventor: Meijer, Johannes, 61166, Kharkiv (UA)
(74) Representative: Needle, Jacqueline

(57) **Abstract**

To target advertising more closely at the user of a television receiver, an advertising server (114) is used to identify the advertisements for output. The server receives (702) information identifying a social network profile associated with the user. The server also receives (704) social network profile data associated with the identified social network profile. The server processes (706) the social network profile data to identify at least one suitable advertisement for output. Information identifying the advertisement is then transmitted (708) to the television receiver. The television receiver can then be caused to output the identified advertisement in conjunction with the other content.

## Description

The present invention relates to a method and apparatus for identifying advertisements for output by a television receiver.

Television receivers, such as cable or satellite television receivers, receive and output content for presentation by a television or other type of presentation device. Typically, content received and output by the television receiver includes advertisements interspersed within the content. In order to get the most value for their money, advertisers select programs which are most likely to have appeal to their key demographics. That is, content providers and advertisers target advertisements towards consumers who are most likely to be interested in the product being advertised. For example, a home improvement store advertisement for power tools is more likely to appeal to men than women. Thus, the home improvement store will advertise the power tools during programs which appeal to men, such as sporting events, rather than programs which appeal more to women, such as soap operas. While such advertising techniques have been used for decades, advertisers desire more granular targeting of advertising which is more likely to appeal to the relevant consumers. For example, a butcher shop may not want to spend money advertising to a vegetarian, because such a viewer is unlikely to visit the butcher shop to purchase items featured in the advertisement.

The present invention seeks to provide an alternate way to target advertising

According to a first aspect of the present invention there is provided a method of identifying television advertisements for output by a television receiver, the method comprising:
receiving information identifying a social network profile associated with a user of a television receiver;
receiving social network profile data, associated with the social network profile;
processing the social network profile data to identify at least one advertisement for output by the television receiver; and
transmitting information, specifying the identified advertisement, to the television receiver, and
causing the television receiver to output the identified advertisement in association with other content.

With embodiments of the invention, a communication system is enabled to select the advertisements to output based on a social network profile of the user. This is likely to produce much better targeted advertising than simply associating advertisements with particular programs, for example.

Preferably, the identifying information and the social network profile data is received at a server which undertakes the processing to identify an advertisement, and the method further comprises causing the server to transmit the identified advertisement to the television receiver, in association with the identifying information.

The method may further comprise
receiving at the server, from the television receiver, a message requesting specification of advertisement material for insertion within an audio/video stream;
and causing the server to transmit the identified advertisement to the television receiver responsive to the message.

The television receiver may output the identified advertisement during a live broadcast of the audio/video stream.

Additionally and/or alternatively, the television receiver may store the audio/video stream for subsequent playback and output the identified advertisement during output of the recorded audio/video stream.

The present invention also extends to a server comprising:
a communication interface for receiving information identifying a social network profile associated with a user of a television receiver, and for receiving social network profile data associated with the social network profile from a social networking server;
storage means for storing metadata associated with a plurality of advertisements; and
control logic for processing the social network profile data to identify at least one of the advertisements for output by the television receiver and to generate a message for transmission to the television receiver, the message specifying the identified advertisement for output by the television receiver;
wherein the communication interface is operable to transmit the message to the television receiver.

Preferably, the storage means is further operable to store the plurality of advertisements, and the control logic is operable to coordinate transfer of the identified advertisement from the storage means to the television receiver via the communication interface.

In an embodiment, the television receiver outputs the identified advertisement in association with an audio/video stream, and the control logic identifies the identified advertisement and initiates transfer of the message to the television receiver prior to output of the audio/video stream by the television receiver.

For example, the message may identify a temporal output location of the identified advertisement during playback of the audio/video stream by the television receiver.

In an alternative embodiment, the television receiver outputs the identified advertisement in association with an audio/video stream, and the control logic coordinates streaming of the identified advertisement to the television receiver during playback of the audio/video stream by the television receiver.

Preferably, the control logic identifies at least one product brand included in the social network profile data and identifies the advertisement based on a competing product of the product brand.

Additionally and/or alternatively, the control logic identifies at least one status update included in the social network profile data and identifies the advertisement based on the status update.

According to a further aspect of the invention there is provided a digital video recorder comprising:
a communication interface for receiving an audio/video stream, the audio/video stream including at least one segment of a program and at least one interstitial of the program, and the communication interface further receiving social network profile data associated with a user of the digital video recorder;
storage means, and
control logic operable to:
   coordinate storage of the audio/video stream by the storage means;
   receive a request to playback the audio/video stream;
   process the social network profile data to identify an advertisement for output in association with the audio/video stream;
   output the audio/video stream for presentation by a presentation device; and
   output the advertisement in association with the audio/video stream for presentation by the presentation device.

In an embodiment, the control logic is operable to identify a temporal location, within the audio/video stream, for insertion of the advertisement and output the advertisement at the temporal location within the audio/video stream.

Preferably, the audio/video stream includes at least one segment of a program, having a beginning temporal location and an ending temporal location, and at least one original advertisement temporally adjacent to the beginning temporal location or the ending temporal location of the segment, and wherein the control logic is operable to identify an intermediate temporal location in the audio/video stream, associated with the segment of the program, for insertion of the identified advertisement, the intermediate temporal location positioned in the audio/video stream between the beginning temporal location and the ending temporal location.

The communication interface may receive the social network profile data from a social networking server.

In an embodiment, the control logic is operable to output an interface, soliciting identifying information regarding the user of the digital video recorder, and the communication interface is operable to transmit the identifying information to a social networking server.

The digital video recorder may further comprise an input interface that receives the social network profile data from a user, the control logic being operable to process the social network profile data and initiate transmission of the social network profile data to a social networking server via the communication interface.

In an embodiment, the control logic is operable to disable a trick play mode during output of the identified advertisement.

Preferably, the control logic identifies the identified advertisement prior to output of the audio/video stream by the television receiver.

Embodiments of the present invention will hereinafter be described, by way of example, with reference to the accompanying drawings, in which:
FIG. 1 illustrates a communication system;
FIG. 2 illustrates an input audio/video stream received by a television receiver;
FIGS. 3-4 illustrate audio/video streams output by a television receiver;
FIG. 5 illustrates an advertising server as in the system of FIG. 1;
FIG. 6 illustrates a DVR;
FIG. 7 is a flow diagram of a method for identifying television advertisements for output by a television receiver; and
FIG. 8 is a flow diagram of a method for presenting a recorded audio/video stream.

There are described herein apparatus, systems and methods which facilitate the reception, processing, and outputting of audio/video (A/V) content. More particularly, techniques are described for selecting supplemental content, such as advertisements, for presentation in association with live or recorded audio/video content. For example, supplemental content, such as advertisements, may be inserted into various locations within an audio/video stream by a television receiver during output to a presentation device. The advertisements may be selected based on social network profile data associated with the viewer, such as profile data, status updates, friend information, user comments and the like. In short, systems, methods and apparatus are described for selecting advertisements for output by a television receiver based on social network profile data.

The audio/video stream to be received, processed, outputted and/or communicated may come in any format of audio/video content. Exemplary audio/video stream formats include Motion Picture Experts Group (MPEG) standards, Flash, Windows Media and the like. The audio/video stream may be supplied by any source, such as an over-the-air (OTA) broadcast, a satellite or cable television distribution system, an internet protocol television (IPTV) distribution system, a digital video disk (DVD) or other optical disk, the internet or other communication networks and the like. While the techniques illustrated herein are described in the context of an audio/video stream, it will be appreciated that the techniques may also be applied to the processing and output of other types of media content, such as audio streams or video streams.

As described, an advertising server processes social network profile data received from a social networking server to select advertisements for presentation by a television receiver. The advertising server then transmits a message to the television receiver specifying the advertisements to be output by the television receiver. The functionality of the advertising server and the social networking server may be combined into a single physical or logical device. For example, the social networking server may process profile data of users stored thereupon to select advertisements for presentation by the television receiver. The social networking server may then transmit a message to the television receiver specifying the advertisements to be output by the television receiver.

A method of identifying the advertisements for output by a television receiver is described. The method includes receiving information, at an advertising server, which identifies a social network profile associated with a user of a television receiver. The information may be provided to the advertising server from any source, such as the television receiver, the social networking server or any other device, including a computer, mobile telephone or the like. The method further includes receiving social network profile data, associated with the social network profile, at the advertising server and processing the social network profile data to identify at least one advertisement for output by the television receiver. The method also includes transmitting information, specifying the identified advertisement, to the television receiver. The television receiver operates to output the identified advertisement in association with other content responsive to the message.

A television receiver may operate to process social network profile data, received from a social networking server or input to the television receiver by a user, to select advertisements for output in association with live or recorded content. For example, the television receiver may provide an interface for a user to access/update their social network profile. The television receiver may then transmit the user input or profile updates derived therefrom to the social networking server for further processing. The television receiver may also process the social network profile input provided by the user to select advertisements for output to the user. The television receiver may also receive social network profile data from the social networking server and process the received data to select advertisements for output by the television receiver.

A digital video recorder (DVR) may be provided and is operable to select advertisements, for output in association with other content, based on processing of social network profile data. The DVR includes a communication interface that receives and stores an audio/video stream or other type of content (e.g., audio content or video content). The audio/video stream includes at least one segment of a program and at least one interstitial (e.g., an advertisement, news alert, public service message or television preview) of the program. The communication interface is further operable to receive social network profile data associated with a user of the DVR. The DVR also includes a storage medium operable to store audio/video data and/or other data for utilization by the DVR. The DVR also includes control logic operable to coordinate storage of the audio/video stream onto the storage medium and receive a request from a user to playback the audio/video stream. The control logic is further operable to process the social network profile data to identify an advertisement for output in association with the audio/video stream. The control logic then coordinates the output of the audio/video stream and the output of the advertisement in association with the audio/video stream for presentation by the presentation device.

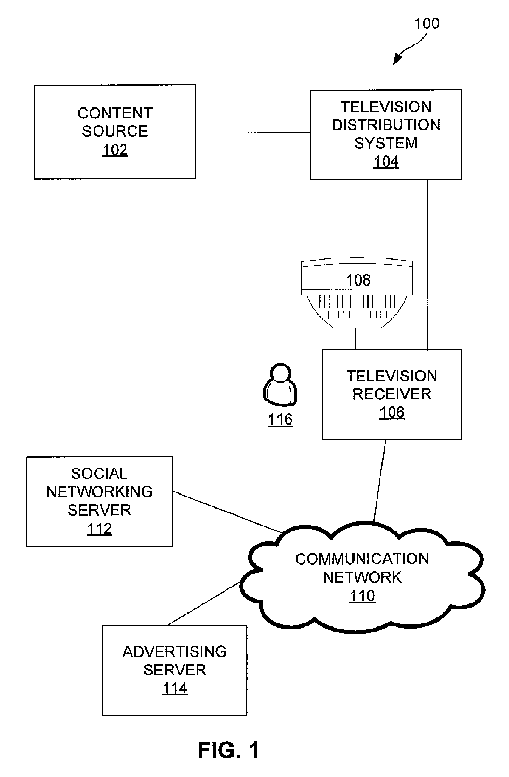

FIG. 1 illustrates an embodiment of a communication system 100. The communication system 100 includes a content source 102, a television distribution system 104, a television receiver 106, a presentation device 108, a communication network 110, a social networking server 112 and an advertising server 114. Each of these components will be described further below. The communication system 100 may include other components, elements or devices which are not illustrated.

The content source 102 is operable for receiving, generating and communicating content to one or more television receivers 106. The content to be received, processed, outputted and/or communicated may come in any of various forms including, but not limited to, audio, video, audio/video, data, information, or otherwise. The content source 102 is operable for receiving various forms and types of content from other sources, aggregating the content and transmitting the content to the television receiver 106 through the television distribution system 104. The content source 102 may receive any form and/or type of information from one or more sources including streaming television programming, recorded audio, audio/video or video content, electronic programming guide data and the like.

The television distribution system 104 is operable to transmit content from the content source 102 to the television receiver 106. The television distribution system 104 may comprise any type of wired (e.g., cable and fiber) and/or wireless (e.g., cellular, satellite, microwave, and other types of radio frequency) communication medium and any desired network topology (or topologies when multiple mediums are utilized). Exemplary television distribution systems 104 include terrestrial, cable, satellite and internet protocol television (IPTV) distribution systems. The television distribution system 104 broadcasts or multicasts content to a plurality of television receivers, e.g., the television receiver 106. The television distribution system 104 may also distribute content to a specific addressable television receiver 106, such as video-on-demand content and the like. If required, the content source 102 may be embodied as a transmission facility of the television distribution system 104. Exemplary content sources 102 include over-the-air (OTA) terrestrial transmission facilities, cable television distribution head-ends, satellite television uplink centers, broadband or internet servers and the like.

The television receiver 106 is operable to receive content from the television distribution system 104 and output the received content for presentation by the presentation device 108. The presentation device 108 is a display device (e.g., a television) configured to display content to a user 116. The television receiver 106 may receive an audio/video stream in any format (e.g., analog or digital format) and output the audio/video stream for presentation by the presentation device 108. The television receiver 106 is a set-top box (e.g., a satellite television receiver, cable television receiver, terrestrial television receiver, internet protocol television (IPTV) receiver or any other type of receiver/converter box) or other similar device that processes and provides one or more audio and/or video output streams to the presentation device 108 for presentation to the user 116. The television receiver 106 may output menus and other information that allow the user 116 to control the output of audio/video content by the television receiver 106, view electronic programming guides, set recording timers and the like.

The television receiver 106 may comprise a DVR operable to store received content for subsequent presentation to the user 116. For example, the television receiver 106 may receive and store television programs requested by a user 116 for subsequent presentation. Such programs may be recorded responsive to recording timers set by the user 116 or a content provider or may alternatively be recorded responsive to input provided by the user 116 while watching content (e.g., the user 116 presses a record button while watching live television). The television receiver 106 may also receive and store advertisements for subsequent presentation. For example, the television receiver 106 may receive and store advertisements which will subsequently be inserted into live or recorded content responsive to appropriate triggering information and/or other instructions associated with the content.

The presentation device 108 may be any type of device capable of receiving and outputting a video signal in any format. For example, the presentation device 108 include a television, a computer monitor, a liquid crystal display (LCD) screen, a touch screen and a projector. The presentation device 108 and the television receiver 106 may be communicatively coupled through any type of wired or wireless interface. For example, the presentation device 108 may be communicatively coupled to the television receiver 106 through a coaxial cable, component or composite video cables, a high-definition multimedia interface (HDMI) cable, a VGA or SVGA cable, a Bluetooth or WiFi wireless connection or the like. The television receiver 106 and the presentation device 108 may be integrated as a device combining the functionality of a display device and a television receiver, such as a television with integrated CableCard functionality.

The presentation device 108 may be any device enabled to receive an audio, video or audio/video stream from the television receiver 106 and present the content to a user 116. Examples of the presentation device 108 include a television, a video monitor or similar device, audio receiver or the like capable of presenting audio and/or video content to the user 116.

The communication network 110 is operable to communicatively couple the television receiver 106 to the social networking server 112 and/or the advertising server 114. The communication network 110 may also operate to communicatively couple the social networking server 112 and the advertising server 114. The social networking server 112 and the advertising server 114 may be communicatively coupled to each other over the same or different communication network than the network coupling each device to the television receiver 106. The communication network 110 may utilize any desired combination of wired (e.g., cable and fiber) and/or wireless (e.g., cellular, wireless, satellite, microwave, and radio frequency) communication mediums and any desired network topology (or topologies when multiple mediums are utilized). Exemplary communication networks include wireless communication networks, public switched telephone networks (PSTN), and local area networks (LAN) or wide area networks (WAN) providing data communication services.

The social networking server 112 is operable to maintain social network profiles and data regarding multiple users. For example, users may update their social network profiles via an internet web page or other appropriate software application operating on the television receiver 106, computers (not shown in FIG. 1), mobile telephones (not shown in FIG. 1) or the like. The social networking server 112 may then provide social network profile data or information derived therefrom to various communication devices, such as computers, mobile telephones, the television receiver 106 or the like. For example, the social networking server 112 may aggregate user profile information (e.g., name, age, location, interests, job and school information and the like) and utilize such information to output user profiles for presentation by various output devices. The social networking server 112 may also maintain various public and non-public information, such as user status updates, user comments, user web browsing or search history, survey information, electronic messages and the like which the social networking server 112 utilizes to maintain and generate social network profiles of users.

The advertising server 114 is operable to receive and process social network profile data received from the social networking server 112 in order to identify advertisements for output by the television receiver 106 in association with other content. Such advertisements may be targeted to the user 116 based on various information included within or associated with the user's 116 social network profile. The advertising server 114 receives information associating the television receiver 106 with the social network profile of the user 116. For example, the user 116 may provide input via an appropriate interface screen of the television receiver 106 identifying their social network profile. The identification data may then be transmitted from the television receiver 106 to the advertising server 114 to associate the television receiver 106 with the social network profile of the user 116. The advertising server 114 may also receive information from the social networking server 112, the user 116 or a service provider specifying the social network profile of the user 116. The advertising server 114 may then utilize the input to associate the television receiver 106 with the social networking server 112.

In operation, the advertising server 114 receives social network profile data from the social networking server 112 and processes the data to identify advertisement display criteria or advertisements for utilization by the television receiver 106. The advertising server 114 may receive social network profile data on a periodic basis (e.g., according to a pre-determined schedule) or may alternatively receive and process the social network profile data in real-time or near real time (e.g., at the same time as users receive updated social network profile data from the social networking server 112). The advertising server 114 may identify specific advertisements for output by the television receiver 106. Such advertisements may be intended for output in association with any content output by the television receiver 106 or specific instances of content, depending on desired design criteria. For example, the user 116 may be a fan of a specific sports team, and thus, the television receiver 106 may output advertisements for apparel related to the sports teams in association with any kind of content output by the television receiver 106.

Additionally and/or alternatively, the television receiver 106 may output an advertisement for a specific type of automobile that the user 116 is interested in purchasing, in association with automobile related programming, but may refrain from outputting the automobile advertisement in association with other programming, such as the news or a soap opera. Likewise, if the social network profile data indicates that the user 116 is interested in purchasing a specific type of automobile, then the advertising server 114 may select an advertisement for a competing automobile for presentation to the user 116. The television receiver 106 may then output the advertisement for presentation by the presentation device 108.

In response to identifying advertisements for output to the user 116, the advertising server 114 may transmit messages to the television receiver 106 specifying particular advertisements for output by the television receiver 106. The television receiver 106 then outputs the identified advertisements, in association with other content, at appropriate locations within the content. For example, advertisements may be inserted at the beginning of the content (e.g., pre-roll), at the end of the content (e.g., post-roll) or inserted at specific locations (e.g., inserted at pre-designated advertising breaks or other logical insertion locations). The advertising server 114 may transmit the selected advertisements to the television receiver 106 through the communication network 110. The television receiver 106 may also receive advertisements from the content source 102 via the television distribution system 104 or from another server (not shown in FIG. 1) via the communication network 110.

For example, a particular advertising slot in a program may be assigned to a particular automobile manufacturer that advertises several different types of automobiles, such as a minivan, a sedan, a truck and a sports car. Based on processing of the social network profile data, the advertising server 114 may determine that the user 116 is a truck person and select the truck advertisement for output by the television receiver 106. Thus, the television receiver 106 outputs the truck advertisement in the advertising slot as instructed by the advertising server 114.

The advertising server 114 transmits a specified advertisement (e.g., the truck advertisement) to the television receiver 106 for storage and/or output. For example, the television receiver 106 may store the truck advertisement for presentation at appropriate times responsive to associated triggering information in live content. Thus, when the television receiver 106 processes the triggering information, then the truck advertisement is loaded from memory and output in the appropriate temporal location within the live content provided to the presentation device 108 for display to the user 116.

The television receiver 106 may incorporate or comprise a DVR and the truck advertisement is stored for output in association with recorded content when a user 116 initiates playback of the recorded content. The television receiver 106 receives the truck advertisement as a streaming transmission from the advertising server 114 or the content source 102. More particularly, the television receiver 106 receives the truck advertisement during output of live or recorded content at an appropriate time corresponding with the output location of the advertisement within the audio/video content. For example, the television receiver 106 may receive the streaming video transmission from the advertising server 114 and pass through the corresponding content to the presentation device 108 for display. The streaming transmission to the television receiver 114 may be initiated by the advertising server 114 or may be initiated by the television receiver 106, depending on desired design criteria. For example, the television receiver 106 may query the advertising server 114 to request streaming of the advertisement to the television receiver 106 at an appropriate time, such as responsive to triggering information in the audio/video stream. The truck advertisement may be transmitted within a particular audio/video stream broadcast by the television distribution system 104. The television receiver 106 may tune to the associated audio/video stream of the advertisement at the appropriate time during output of television program content received in another audio/video stream.

The television receiver 106 may receive advertisement selection criteria from the advertising server 114 for utilization in identifying an advertisement for output. For example, the advertisement selection criteria may be generated by the advertising server 114 based on interests, demographics or other social network profile data of the user 116. The advertising selection criteria may then be utilized by the television receiver 106 to select an appropriate advertisement for output in association with particular content. Thus, the television receiver 106 may receive multiple advertisements and select one or more of the advertisements for output at a particular time based on the advertisement selection criteria and/or the content being output.

For example, a particular advertising slot in a program may be assigned for output of a food related advertisement. Thus, if the user's 116 favorite restaurant is ABC Burger, as specified in their social network profile data, then the television receiver 106 may output an advertisement for ABC Burger's competitor, XYZ Burger, based on the advertisement selection criteria. In a similar scenario, if the user's 116 favorite food is a cheeseburger, then the advertisement selection criteria may specify their favorite food, such that the television receiver 106 may select and output an advertisement from ABC Burger for a different product. Thus, ABC Burger may attempt through the advertisement to get the user 116 interested in other products offered at the restaurant. In some embodiments, advertisements may be selected by the television receiver 106 for output based on a time of day in association with the processing of the social network profile. For example, in the morning, the television receiver 106 may output an advertisement for pancake sticks offered by ABC Burger, whereas in the evening, the television receiver 106 may output an advertisement for a bacon cheeseburger offered by ABC Burger.

The advertisements may be selected by the advertising server 114 based on status updates of the user on their social network profile. For example, if the user 116 posts a social network profile update stating "I am hungry" while watching television, then the advertising server 114 may instruct the television receiver 106 to output an advertisement for one of various restaurants in the area. Such advertisement selection may be further refined based on information in the user's 116 social network profile. For example, if the user's favorite restaurant is ABC Burger, then the television receiver 106 may output an advertisement for their competitor, XYZ Burger, or for XYZ Pizza or even an advertisement for ABC Burger. Of course, the television receiver 106 and/or the advertising server 114 may apply any type of heuristic rules or other analysis techniques to select advertisements for output in association with other content based on social network profile data and other factors, such as time of day or the like.

As described above, advertisements may be output by the television receiver at any appropriate location within live or recorded content. For example, advertisements may be output at the beginning or ending of recorded content output by the television receiver 106. Advertisements may be output to replace other advertisements in live or recorded content. For example, in live content, the content source 102 may broadcast an original advertisement but may include triggering information allowing the television receiver 106 to replace the advertisement with a more targeted advertisement, if appropriate. The television receiver 106 may then replace the advertisement with another advertisement stored on disk, received from the advertising server 114 in a streaming transmission in substantially real-time or received from the content source 102 via another channel of the television distribution system 104.

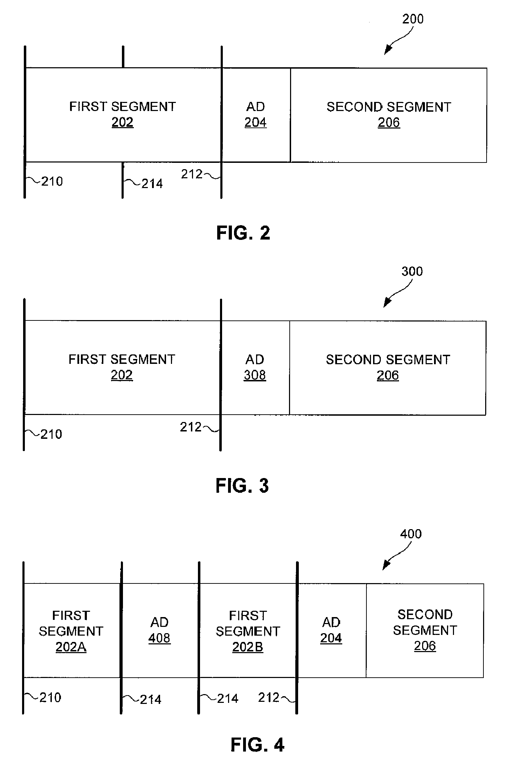

FIG. 2 illustrates an embodiment of an input audio/video stream 200 received by the television receiver 106 from the television distribution system 104. As illustrated in FIG. 2, the input audio/video stream 200 includes a first segment 202 of a program, an original advertisement 204 and a second segment 206 of the program. The first segment 202 includes a beginning temporal location 210 and an ending temporal location 212. The first segment 202 also includes an intermediate temporal location 214 positioned between the beginning temporal location 210 and the ending temporal location 212.

The television receiver 106 may operate to replace the original advertisement 204 with a substitute advertisement 308 (see FIG. 3). As illustrated in FIG. 3, the output video stream 300 includes the first segment 202, the substitute advertisement 308 and the second segment 206. Thus, the user 116 does not see the original advertisement 204, but sees the substitute advertisement 308 instead. Because the substitute advertisement 308 is selected for output based on processing of the social network profile data of the user 116, the advertisement is more likely to appeal to the user 116. If the audio/video stream 200 is content recorded by the television receiver 106, then the television receiver 106 may disable a trick play mode function during output of the substitute advertisement 308. This prevents the user 116 from skipping over advertising material during playback of the audio/video stream 300.

Supplemental advertising may be inserted at locations other than original advertising breaks within recorded content. For example, the recorded audio/video content may include markers or other metadata specifying insertion locations for supplemental advertising. The television receiver 106 may receive information separate from the audio/video content specifying temporal insertion locations of supplemental advertisements within the audio/video content.

Responsive to a request to playback content, the television receiver 106 outputs the audio/video stream to the presentation device 108 for presentation to a user 116. The television receiver 106 operates to identify an intermediate temporal location 214 for insertion of the supplemental content. The first segment 202 may then be divided into discrete portions of content. The first portion includes the content between the beginning temporal location 210 and the intermediate temporal location 214. The second portion includes the content between the intermediate temporal location 214 and the ending temporal location 212. During output, the supplemental content is then inserted at the intermediate temporal location 214.

FIG. 4 illustrates an output audio/video stream 400 output by the television receiver 106 using the techniques described. As illustrated in the output audio/video stream 400, the television receiver 106 operates to output the first segment 202A between the beginning temporal location 210 and the intermediate temporal location 214. The television receiver 106 then outputs a supplemental advertisement 408 for presentation by the presentation device 108. Following the supplemental advertisement 408, the television receiver 106 operates to output the remaining portion of the first segment 202B between the intermediate temporal location 214 and the ending temporal location 212. Other content, such as the original advertisement 204 and the second segment 206 may also be output by the television receiver 106 for presentation by the presentation device 108.

Thus, the television receiver 106 operates to output other advertisements or content during playback of a recorded audio/video stream. Furthermore, the television receiver 106 may disable a trick play mode function during output of the supplemental advertisement 408. This allows an advertiser to capture the attention of the user 116 during playback of the recorded audio/video stream 400 at a different time than the original advertisement break and further avoids the problem of the user 116 skipping over advertising material during playback of the audio/video stream 400.

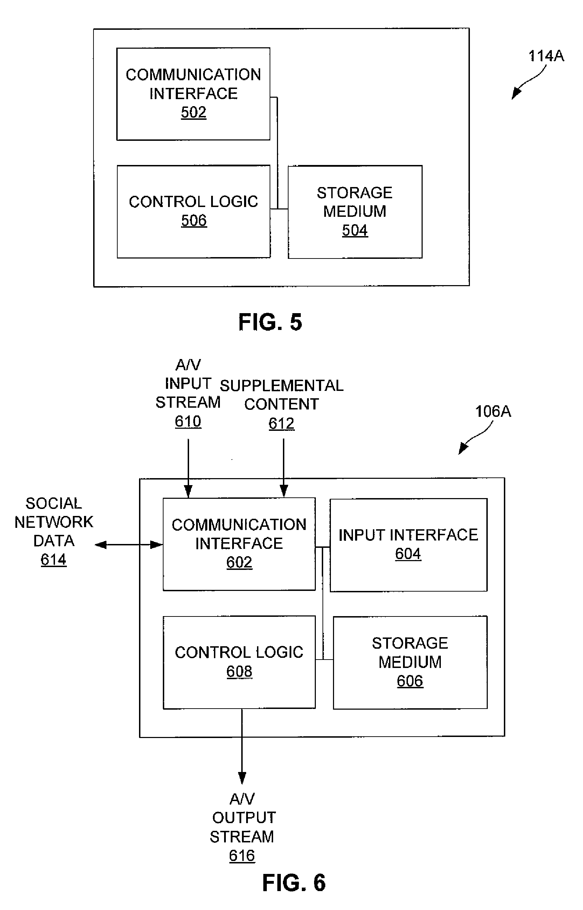

FIG. 5 illustrates an embodiment of an advertising server of the system shown in FIG. 1. The advertising server 114A includes a communication interface 502, a storage medium 504 and control logic 506. Each of these components is described further below. The server 114A may include other components, elements or devices which are not illustrated.

The communication interface 502 is operable to receive social network profile data from the social networking server 114 (see FIG. 1). More particularly, the communication interface 502 receives information identifying a social network profile associated with a user 116 of the television receiver 106. The communication interface 602 then exchanges messages with the social networking server 112 in order to receive the social network profile data associated with the identified social network profile. The social network profile data is then processed by the control logic 506 as described below to identify advertisements for output by the television receiver 106 (see FIG. 1). The communication interface 502 is also operable to communicate data to the television receiver 106 via the communication network 110, such as metadata specifying advertisements for output by the television receiver 106 and/or the advertisements for output by the television receiver 106. The communication interface 502 may be communicatively coupled to the social networking server 114A and the television receiver 106 through distinct communication networks.

The storage medium 504 is operable to store metadata regarding supplemental content, such as advertisements for output by the television receiver 106. For example, the storage medium 504 may store metadata describing various advertisements and the programs for which the advertisements will be output in association therewith by the television receiver 106. The storage medium 504 may store various criteria associated with the advertisements specifying the conditions in which the television receiver 106 will output the advertisements in association with other content. For example, display criteria may include time of day, user demographic information, content topic and the like. The control logic 506 may then process the criteria in association with the social network profile data to select an advertisement for output by the television receiver 106. The storage medium 504 may also store the advertisements which are transmitted to the television receiver 106 through the communication network 110.

The control logic 506 is operable to control the operation of the server 114A. More particularly, the control logic 506 is operable to process the social network data received from the social networking server 112 (see FIG. 1) and select advertisements or other supplemental content for output by the television receiver 106. The control logic 506 may be a single processing device or a plurality of processing devices that cooperatively operate to control the operation of the server 114A.

The control logic 506 processes the social network profile data received from the social networking server 512 to identify advertisements for output by the television receiver 106. The control logic 506 then generates a message for transmission to the television receiver 106 via the communication interface 502 specifying the criteria for display of a particular advertisement. For example, the advertisement may specify a particular product that the user 116 may be interested in based on their hobbies/interests or the like. The television receiver 106 may be instructed to output the advertisement during a particular program. For example, an advertisement for a new toy may be output during playback of a cartoon (e.g., when a child is most likely watching the content), but may not be output during playback of a basketball game, when the user 116 is more likely an adult).

The control logic 506 may identify multiple advertisements and transmit a message to the television receiver 106 specifying the display criteria. For example, the message may specify multiple restaurant advertisements and the television receiver 106 may output one of the advertisements based on the criteria at a specific time of the day (e.g., dinner time).

The television receiver 106 of the communication system 100 of FIG. 1 may be embodied in a DVR operable to record television programming and other content for subsequent presentation to the user 116. FIG. 6 illustrates an embodiment of a DVR 106A. The DVR 106A includes a communication interface 602, an input interface 604, a storage medium 606 and control logic 608. Each of these components is discussed further below. The DVR 106A may include other components, elements or devices which are not illustrated.

The communication interface 602 is operable to receive an audio/video input stream 610 from the television distribution system 104. More particularly, the communication interface 602 receives and tunes a television signal including television programming. The communication interface 602 may receive an over-the-air (OTA) broadcast, a direct broadcast satellite signal, a cable television signal or an internet protocol television (IPTV) signal and tune the audio/video input stream 610 to extract the selected television programming. The communication interface 602 may include multiple tuners, utilized by the DVR 106A to output and/or record multiple television programs simultaneously.

The communication interface 602 is further operable to receive supplemental content 612 from an external source. For example, the communication interface 602 may receive the supplemental content 612 from either the content source 102 via the television distribution system 104 or from the advertising server 114 via the communication network 110. The communication interface 602 may also receive other data, such as advertising selection criteria, from the advertising server 114, which is utilized by the control logic 608 to identify supplemental content 612 for output. The communication interface 602 is operable to exchange social network profile data 614 with the social networking server 112. For example, the communication interface 602 may download social network profile data 614 from the social networking server 112 or may upload social network profile data 614, such as profile updates, to the social networking server 112 for propagation across the social network.

The communication interface 602 may include a network interface, such as a WiFi transceiver or Ethernet interface for communication with the communication network 110. Furthermore, the communication interface 602 may include any number of discrete communication interfaces to exchange data with external sources, such as the television distribution system 104, the social networking server 112 and/or the advertising server 114. For example, the communication interface 602 may include a satellite television tuner to receive content from a satellite television distribution network and may include a network interface to receive content from a discrete data communication network, such as a local area network (LAN) or wide area network (WAN).

The input interface 604 is operable to wirelessly receive data from a remote control or other input device (not shown in FIG. 1). The input interface 604 may communicate with a remote control utilizing any type of IR and/or RF communication link. The input interface 604 receives a key code from a remote control and responsively provides the key code to the control logic 608 for processing. The data received from the remote control may be utilized by the control logic 608 to control the output of content by the control logic 608. Some of the data received by the input interface 604 may request to view electronic programming guide data, menus and the like.

The storage medium 606 is operable to persistently store video signals recorded by the DVR 106A. The storage medium 606 may comprise any type of non-volatile memory appropriate for storing video signals recorded by the DVR 106A. Exemplary storage mediums 606 include hard drives (e.g., magnetic memory), flash memory, battery backed up memory and the like. The storage medium 606 may be internally located within the DVR 106A. Additionally and/or alternatively, the storage medium 606 may be located externally of the DVR 106A. The DVR 106A may also utilize a combination of internal and external storage mediums 606 for storage of video signals. The storage medium 606 is operable to store the supplemental content 612, advertising selection criteria, other metadata and/or the social network profile data 614 for subsequent processing and output to the presentation device 108 (see FIG. 1).

The control logic 608 is operable to control the operation of the DVR 106A and output of content therefrom. The control logic 608 may be a single processing device or a plurality of processing devices that cooperatively operate to control the operation of the DVR 106A. The control logic 608 may include various components or modules for processing and outputting audio/video content. Exemplary components or modules for processing audio/video content include a demodulator, a decoder, a decompressor, a conditional access module and a transcoder module.

The control logic 608 coordinates storage of the audio/video input stream 610 onto the storage medium 606. More particularly, the control logic 608 operates responsive to recording timers configured on the DVR 106A or other input (either supplied by a user 116 or content provider) to command the communication interface 602 to receive content from a specified channel and coordinates storage of the content onto the storage medium 606. The control logic 608 is operable to coordinate the storage of the supplemental content 612 for subsequent processing and utilization. For example, the advertising server 114 (see FIG. 1) may transmit a particular advertisement to the DVR 106A that corresponds with a particular program stored thereupon. In one scenario, the communication interface 602 may receive the supplemental content 612 which includes an advertisement that may be outputted in association with any content output by the DVR 106A. The communication interface 602 may also receive a plurality of advertisements, which are stored by the storage medium 606 for subsequent playback. The control logic 608 may then perform appropriate processing of the social networking data 614, advertisement selection criteria and/or metadata associated with the audio/video input stream 610 to select an appropriate advertisement for output in association with the audio/video input stream 610.

The control logic 608 is operable to generate an audio/video output stream 616 based on the audio/video input stream 610, e.g., pass through the signal for display by an associated presentation device 108. The control logic 608 is also operable to retrieve stored video content from the storage medium 606 to generate an audio/video output stream 616 for presentation by the presentation device 108. As described above, the control logic 608 is operable to identify a location within the audio/video input stream 610 for insertion of the supplemental content 612 during output of the audio/video output stream 616. The presentation device 108 then presents the audio/video output stream 614 to the user 116. The control logic 608 may incorporate circuitry to output audio/video streams in any format recognizable by the presentation device 108, including composite video, component video, Digital Visual Interface (DVI), High-Definition Multimedia Interface (HDMI), 1394 and WiFi The control logic 608 may also incorporate circuitry to support multiple types of these or other audio/video formats. The DVR 106A may be integrated with the presentation device 108, and the control logic 608 may be operable to control the presentation of the audio/video output stream 614 by the presentation device 108.

As described above, the control logic 608 may process the social networking data 614 to select an appropriate advertisement for output in the audio/video output stream 616. The control logic 608 may apply any type of heuristic rules or other analysis to the social networking data 614 in order to select an advertisement for output in the audio/video output stream 616. For example, any of the data analysis techniques described above in reference to the advertising server 114 may also be performed by the control logic 608 to select an advertisement for output. Thus, in at least one embodiment, the DVR 106A may select advertisements for output without receiving any data from the advertising server 114.

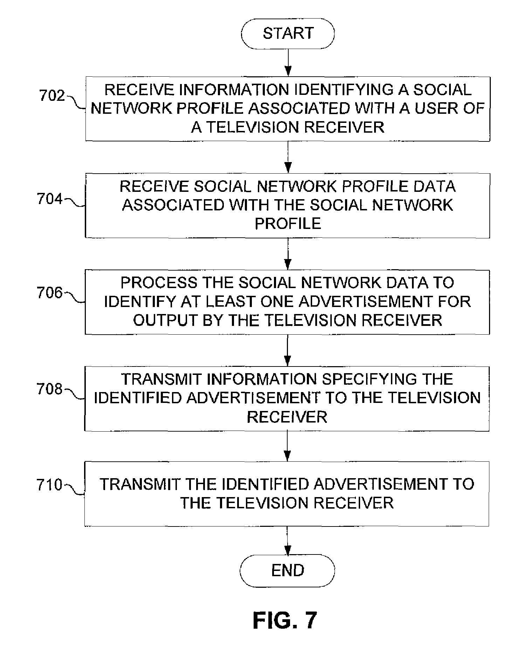

FIG. 7 shows a flow diagram of a method for identifying television advertisements for output by a television receiver. The method of FIG. 7 may be operated by an external device, such as an advertising server, to identify advertisements for output by a television receiver and transmit instructions to the television receiver identifying the advertisements for output. The method of FIG. 7 may include other steps and operations which are not illustrated.

The method includes receiving information, for example at a server, identifying a social network profile associated with a user of a television receiver (operation 702). The method further includes receiving social network profile data, associated with the social network profile, at the server (operation 704). For example, an advertising server may query a social networking server to receive social network profile associated with the social network profile identified in operation 702.

The method further includes processing the social network profile data, for example at the server, to identify at least one advertisement for output by the television receiver (operation 706). The process further includes transmitting information, specifying the identified advertisement, to the television receiver (operation 708). Operation 708 may include receiving a message, at the server, from the television receiver, the message requesting specification of advertisement material for insertion within an audio/video stream. Responsive to the message, the server transmits information identifying the advertisement to the television receiver. The method may optionally include transmitting the identified advertisement, from the server to the television receiver, in association with the identifying information (operation 710). The television receiver operates to output the identified advertisement in association with other content.

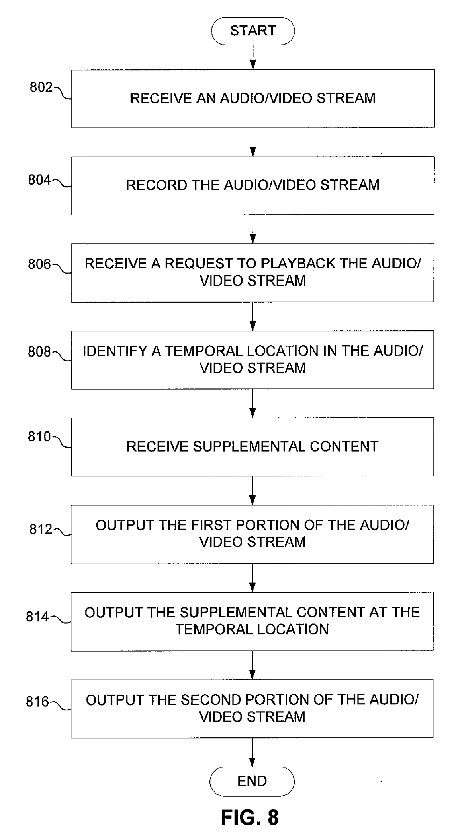

FIG. 8 shows a flow diagram of a method for presenting a recorded audio/video stream. For example, the method of FIG. 8 is directed at inserting advertisements within recorded audio/video content. The method of FIG. 8 may include other steps and operations which are not illustrated.

The method includes receiving an audio/video stream using a communication interface of a television receiver/DVR (operation 802). The audio/video stream includes at least one segment of content having a beginning temporal location and an ending temporal location. The method further includes recording the audio/video stream onto a storage medium associated with the television receiver (operation 804). The method includes receiving a request to playback the audio/video stream (operation 806). For example, a user may select the audio/video stream for output using a remote control to navigate an available recordings selection menu screen.

The method further includes identifying an intermediate temporal location in the audio/video stream, associated with the segment of the program, for insertion of supplemental content (operation 808). The intermediate temporal location is between the beginning temporal location and the ending temporal location. Thus, the intermediate location divides the segment into at least two portions of content. For example, the supplemental content may be utilized to add to the length of the recorded audio/video stream (e.g., insert supplemental advertisements) or may be utilized to replace portions of content in the recorded audio/video stream. The television receiver may receive metadata specifying the intermediate location.

The method further includes receiving the supplemental content (operation 810). The supplemental content may be received before, after or simultaneously with the request to playback the content. The television receiver may receive the supplemental content prior to receiving the audio/video stream in operation 802.

Responsive to the request, the method further includes outputting the segment of the program, between the beginning temporal location and the intermediate temporal location, for presentation by a presentation device (operation 812). The method further includes outputting the supplemental content, following the intermediate temporal location, for presentation by the presentation device (operation 814). A television receiver may disable a trick play mode function (e.g., fast forward, reverse, skip ahead or the like) during output of the supplemental content. Following the output of the supplemental content, the method includes outputting the segment of the program, between the intermediate temporal location and the ending temporal location, for presentation by the presentation device (operation 816).

The television receiver may identify another temporal location subsequent to the intermediate temporal location. The television receiver may alternatively begin playback of the segment of the program from the other temporal location rather than the intermediate temporal location in operation 816. Thus, the television receiver operates to replace a portion of the audio/video stream with the supplemental content rather than augmenting the recorded content with the supplemental content. It will be appreciated that any number of portions of supplemental content may be inserted within a recorded audio/video stream during output depending upon desired design criteria. Thus, operations 808 through 816 may be performed multiple times depending on the number of supplemental content instances to be shown during output of the recorded audio/video stream.

It will be appreciated that variations in, or modifications to, the embodiments described and illustrated may be made within the scope of the invention as defined by the accompanying claims.

## Claims

1. A method of identifying television advertisements for output by a television receiver, the method comprising:
receiving information identifying a social network profile associated with a user of a television receiver;
receiving social network profile data, associated with the social network profile;
processing the social network profile data to identify at least one advertisement for output by the television receiver;
transmitting information, specifying the identified advertisement, to the television receiver, and
causing the television receiver to output the identified advertisement in association with other content.

2. A method as claimed in Claim 1, wherein the identifying information and the social network profile data is received at a server which undertakes the processing to identify an advertisement, and wherein the method further comprises causing the server to transmit the identified advertisement to the television receiver, in association with the identifying information.

3. A method as claimed in Claim 2, further comprising:
receiving at the server, from the television receiver, a message requesting specification of advertisement material for insertion within an audio/video stream;
and causing the server to transmit the identified advertisement to the television receiver responsive to the message.

4. A server comprising:
a communication interface for receiving information identifying a social network profile associated with a user of a television receiver, and for receiving social network profile data associated with the social network profile from a social networking server;
storage means for storing metadata associated with a plurality of advertisements; and
control logic for processing the social network profile data to identify at least one of the advertisements for output by the television receiver and to generate a message for transmission to the television receiver, the message specifying the identified advertisement for output by the television receiver;
wherein the communication interface is operable to transmit the message to the television receiver.

5. A server as claimed in Claim 4, wherein the storage means is further operable to store the plurality of advertisements, and the control logic is operable to coordinate transfer of the identified advertisement from the storage means to the television receiver by way of the communication interface.

6. A server as claimed in Claim 4 or Claim 5, wherein the television receiver outputs the identified advertisement in association with an audio/video stream, and the control logic identifies the identified advertisement and initiates transfer of the message to the television receiver prior to output of the audio/video stream by the television receiver.

7. A server as claimed in Claim 6, wherein the message identifies a temporal output location of the identified advertisement during playback of the audio/video stream by the television receiver.

8. A server as claimed in Claim 4 or Claim 5, wherein the television receiver outputs the identified advertisement in association with an audio/video stream, and the control logic coordinates streaming of the identified advertisement to the television receiver during playback of the audio/video stream by the television receiver.

9. A digital video recorder comprising:
a communication interface for receiving an audio/video stream, the audio/video stream including at least one segment of a program and at least one interstitial of the program, and the communication interface further receiving social network profile data associated with a user of the digital video recorder;
storage means; and
control logic operable to:
coordinate storage of the audio/video stream by the storage means;
receive a request to playback the audio/video stream;
process the social network profile data to identify an advertisement for output in association with the audio/video stream;
output the audio/video stream for presentation by a presentation device; and
output the advertisement in association with the audio/video stream for presentation by the presentation device.

10. A digital video recorder as claimed in Claim 9, wherein the control logic is operable to identify a temporal location, within the audio/video stream, for insertion of the advertisement and output the advertisement at the temporal location within the audio/video stream.

11. A digital video recorder as claimed in Claim 9 or Claim 10, wherein the audio/video stream includes at least one segment of a program, having a beginning temporal location, and an ending temporal location and at least one original advertisement temporally adjacent to the beginning temporal location or the ending temporal location of the segment, and wherein the control logic is operable to identify an intermediate temporal location in the audio/video stream, associated with the segment of the program, for insertion of the identified advertisement, the intermediate temporal location positioned in the audio/video stream between the beginning temporal location and the ending temporal location.

12. A digital video recorder as claimed in any of Claims 9 to 11, wherein the communication interface receives the social network profile data from a social networking server.

13. A digital video recorder as claimed in any of Claims 9 to 12, wherein the control logic is operable to output an interface, soliciting identifying information regarding the user of the digital video recorder, and the communication interface is operable to transmit the identifying information to a social networking server.

14. A digital video recorder as claimed in any of Claims 9 to 13, further comprising an input interface that receives the social network profile data from a user, the control logic being operable to process the social network profile data and initiate transmission of the social network profile data to a social networking server by way of the communication interface.

15. A digital video recorder as claimed in any of Claims 9 to 14, wherein the control logic is operable to disable a trick play mode during output of the identified advertisement.
